# EUROPÄISCHE PATENTSCHRIFT

(11) **EP 3 092 882 B1**
(45) Veröffentlichungstag und Bekanntmachung des Hinweises auf die Patenterteilung: **28.08.2019**
(21) Anmeldenummer: 16160254.5
(22) Anmeldetag: 15.03.2016
(51) Int. Cl.: B60Q 1/00, B60Q 1/12, B60Q 1/14, B60Q 1/18, B60Q 1/24, A01B 76/00

(54) **LANDWIRTSCHAFTLICHE ARBEITSMASCHINE**
AGRICULTURAL WORK MACHINE
ENGIN AGRICOLE

(30) Priorität: 12.05.2015 DE 102015107458
(43) Veröffentlichungstag der Anmeldung: 16.11.2016
(73) Patentinhaber: CLAAS Tractor S.A.S., 78141 Vélizy-Villacoublay Cedex (FR)
(72) Erfinder: Pontinha, Daniel, 78260 Achères (FR); Desbois, Frédéric, 78570 Andrésy (FR)
(74) Vertreter: CLAAS Gruppe

(56) Entgegenhaltungen:
- EP-A1- 2 823 996
- US-A- 4 442 477
- US-A- 5 442 527

## Beschreibung

Die Erfindung betrifft eine landwirtschaftliche Arbeitsmaschine gemäß dem Oberbegriff des Anspruchs 1.

Landwirtschaftliche Arbeitsmaschinen wie Traktoren oder selbstfahrende Erntemaschinen werden zu unterschiedlichen Zwecken auf dem Feld, auf Feldwegen, auf öffentlichen Straßen, auf Betriebshöfen und dergleichen eingesetzt. Mit den Arbeitsmaschinen werden dann zumeist landwirtschaftliche Arbeitsverfahren (z.B. Bodenbearbeitung, Saat, Düngen, Ernte) und/oder Transportarbeiten durchgeführt wie der Transport von Anbaugeräten oder Anhängern der Arbeitsmaschine durch diese selbst von einem Einsatzort zum nächsten. Zahlreiche weitere Einsatzzwecke für landwirtschaftliche Arbeitsmaschine sind bekannt.

Insbesondere zur Vermeidung von betriebsbedingten Unfällen, d.h. aus Sicherheitsgründen, ist es wichtig, dass landwirtschaftliche Arbeitsmaschinen in den unterschiedlichen zuvor genannten Einsatzsituationen einfach und sicher erkennbar sind und besonders eine über eine gute Ausleuchtung insbesondere des Umfeldes der Arbeitsmaschine verfügen. Denn aus verschiedenen Gründen kann eine Arbeitsmaschine schnell eine Gefahr für im Umfeld der Arbeitsmaschine befindliche Personen und/oder Sachgüter oder für andere Verkehrsteilnehmer werden. Dies liegt beispielsweise an der oftmals besonderen Arbeitsmaschinengröße und -masse, an der Ausstattung mit möglicherweise überdimensionierten und/oder scharfkantigen Arbeitsgeräten, an der im Straßenverkehr verhältnismäßig geringen Fahrgeschwindigkeit, oder an der eingeschränkten Übersichtlichkeit. Aus den zuvor genannten Gründen und ganz allgemein schon wegen der üblicherweise gewünschten Einsatzmöglichkeit einer landwirtschaftlichen Arbeitsmaschine auf öffentlichen Straßen muss eine landwirtschaftliche Arbeitsmaschine in vielen Ländern bestimmte Zulassungsvorschriften, in Deutschland etwa die der Straßenverkehrszulassungsordnung StVZO, erfüllen. Diese Zulassungsvorschriften regeln unter anderem die Beleuchtung einer landwirtschaftlichen Arbeitsmaschine.

Für Fahrten im öffentlichen Straßenverkehr, bei Dunkelheit oder auch am Tage, weist die landwirtschaftliche Arbeitsmaschine mehrere Beleuchtungseinrichtungen auf. Bei diesen Fahrten kann beispielsweise das sogenannte Abblendlicht genutzt werden, dass bei Traktoren zumeist durch eine frontseitig an der Motorhaube angeordnete Beleuchtungseinrichtung bereitgestellt wird, welches keine oder nur eine sehr geringe Blendwirkung für andere Verkehrsteilnehmer aufweist. Diese weist eine Lichtquelle auf, die innerhalb eines Reflektors angeordnet ist. Zum Schutz der Lichtquelle und des Reflektors vor Außeneinflüssen wie Feuchtigkeit, Schmutz oder Fremdkörpern dient ein lichtdurchlässiges Element, welches die Beleuchtungseinrichtung nach außen hin abschließt. Mit einer derartigen Beleuchtungseinrichtung lässt sich von der Lichtquelle erzeugtes Licht gerichtet an die vordere Umgebung der Arbeitsmaschine abstrahlen. Das sogenannte "Abblendlicht" ist damit eigentlich zur Ausleuchtung der Umgebung bei Dunkelheit geeignet, um einem in der Arbeitsmaschine sitzenden Bediener der Arbeitsmaschine die dunkle Umgebung zu beleuchten. Wird das Abblendlicht bei Tageslichtbedingungen genutzt, sorgt die für die nächtliche Ausleuchtung der Umgebung optimierte Lichtverteilung dafür, dass ein Großteil des Lichts auf den Untergrund vor der Arbeitsmaschine gelenkt wird, so dass ein mögliches Blenden andere Verkehrsteilnehmer vermieden wird.

Zur Verbesserung der Ausleuchtung des Bereiches vor der Arbeitsmaschine und insbesondere des Arbeitsbereiches ist es üblich, die Arbeitsmaschine mit weiteren Lampen auszustatten, die beispielsweise ein für die Feldarbeit geeignetes Licht abstrahlen. Hierzu sei beispielhaft auf die EP 0 757 945 A2 verwiesen, aus der seitlich an einem Frontende eines Traktors angeordnete Scheinwerfer bekannt sind, welche eine verbesserte Ausleuchtung im Vorfeld des Traktors ermöglichen. Derartige Lampen sind oft sehr leistungsfähig und verbessern die Sichtverhältnisse, weisen jedoch den Nachteil auf, dass diese nicht im öffentlichen Straßenverkehr zugelassen sind.

Aus der US 4,442,477 A ist eine landwirtschaftliche Arbeitsmaschine der eingangs genannten Art bekannt.

Aufgabe der vorliegenden Erfindung ist es daher, eine landwirtschaftliche Arbeitsmaschine anzugeben, welche mit einem verhältnismäßig geringen konstruktivem Aufwand eine Arbeitsfeldbeleuchtung und Straßenbeleuchtung ermöglicht, die auch wechselnden Anforderungen eines Bedieners einer landwirtschaftlichen Arbeitsmaschine genügt.

Die Aufgabe wird gelöst durch die Merkmale des unabhängigen Anspruches 1. Weitere vorteilhafte Ausgestaltungen der Erfindung sind in den Unteransprüchen angegeben.

Eine landwirtschaftliche Arbeitsmaschine mit mindestens einer ersten Beleuchtungseinrichtung zur Straßenfahrt, welche zumindest die Funktion eines Abblendlichtes und/oder eines Fernlichtes erfüllt, und mindestens einer zweiten Beleuchtungseinrichtung, welche die Funktion eines Arbeitslichtes erfüllt, wobei die Beleuchtungseinrichtungen zur Erzeugung des Lichtes Lichtquellen aufweisen und das Licht zumindest teilweise gerichtet an eine Umgebung der Arbeitsmaschine abgeben. Dabei ist die zweite Beleuchtungseinrichtung in einem ersten Betriebsmodus für eine Straßenfahrt und einem zweiten Betriebsmodus als Arbeitsbeleuchtung einsetzbar.

An einer Arbeitsmaschine wie einem Traktor sind üblicherweise jeweils mehrere erste und/oder zweite Beleuchtungseinrichtungen angeordnet. Die Beleuchtungsanordnungen können dabei räumlich benachbart und/oder beabstandet zueinander angeordnet sein. Die erste Beleuchtungseinrichtung weist zur Erzeugung von Licht mindestens eine Lichtquelle auf, um die Funktion eines Abblendlichts und/oder Fernlichts und/oder Standlichts der Arbeitsmaschine zu erfüllen. Ein Abblendlicht ist dabei ein im Straßenverkehr und bei der Arbeit nutzbares Licht, welches den gesetzlichen Anforderungen für den öffentlichen Straßenverkehr entspricht und eine für andere Verkehrsteilnehmer weitestgehend blendfreie Ausleuchtung der Umgebung vor der Arbeitsmaschine ermöglicht. Ein Fernlicht ist üblicherweise zu dem Abblendlicht hinzuschaltbar und entspricht ebenfalls den gesetzlichen Erfordernissen für den öffentlichen Straßenverkehr und ermöglicht ein weiträumiges Ausleuchten der Umgebung vor der Arbeitsmaschine, wobei andere Verkehrsteilnehmer geblendet werden können, so dass dies nur zweitweise nutzbar ist. Zur Erzielung einer hierfür erforderlichen gerichteten Lichtabstrahlung kann dabei die jeweilige Lichtquelle in einem Reflektor, beispielsweise in Form eines Hohlspiegels, insbesondere eines Parabolspiegels, angeordnet sein. Die Lichtquelle ist dann zweckmäßigerweise in einem Brennpunkt - oder zumindest in der Nähe des Brennpunkts - des Reflektors angeordnet. Ein Standlicht dient weniger der Ausleuchtung des Umfeldes der Arbeitsmaschine als der Kenntlichmachung einer beispielsweise abgestellten Arbeitsmaschine für andere Verkehrsteilnehmer. Hierzu ist keine hohe oder gerichtete Lichtabgabe erforderlich, so dass hier unterschiedlichste Lichtquellen genutzt werden können. Die zweite Beleuchtungseinrichtung weist ebenfalls mindestens eine Lichtquelle zur Abgabe eines gerichteten Lichtstrahles auf. Die zweite Beleuchtungseinrichtung ist dabei in einem ersten Betriebsmodus für eine Straßenfahrt und einem zweiten Betriebsmodus als Arbeitsbeleuchtung einsetzbar. In dem ersten Betriebsmodus entspricht die zweite Beleuchtungseinrichtung den gesetzlichen Anforderungen zur Teilnahme an dem öffentlichen Straßenverkehr, insbesondere im Hinblick auf die Anordnung der zweiten Beleuchtungseinrichtung an der Arbeitsmaschine als auch deren Lichtabgabe. In dem zweiten Betriebsmodus, welcher als Arbeitsbeleuchtung gedacht ist, entspricht die Abstrahlung des Lichtes den Erfordernissen des Bedieners der Arbeitsmaschine. Entsprechend dem Beleuchtungsbedarf können mehrere erste Beleuchtungseinrichtungen und zweite Beleuchtungseinrichtungen an der Arbeitsmaschine angeordnet sein. Die ersten und die zweiten Beleuchtungseinrichtungen sind dabei jeweils paarweise entsprechend den gesetzlichen Anforderungen an den Seiten der Arbeitsmaschine angeordnet. Hierbei kann beispielsweise von einem Paar erster Beleuchtungseinrichtungen symmetrisch an jeder Seite der Arbeitsmaschine eine erste Beleuchtungseinrichtung angeordnet sein.

Daraus ergibt sich der Vorteil, dass durch die Nutzung der zweiten Beleuchtungseinrichtungen sowohl bei der Straßenfahrt als auch als Arbeitsbeleuchtung mit verhältnismäßig geringem konstruktivem Aufwand die Möglichkeit einer zusätzlichen Beleuchtung besonders im Straßenverkehr geschaffen ist. Durch geeignetes Schalten der Betriebsmodi der zweiten Beleuchtungseinrichtungen lässt sich die Arbeitsmaschine unter verschiedenen Bedingungen, insbesondere bei Nacht und Tag, durch eine verbesserte Beleuchtung sicherer betreiben und die wechselnden Anforderungen an die Beleuchtung eines Bedieners der landwirtschaftlichen Arbeitsmaschine besser erfüllen.

Erfindungsgemäß sind der erste Betriebsmodus und/oder der zweite Betriebsmodus in Abhängigkeit einer Position der Arbeitsmaschine durch eine Steuereinrichtung automatisch geschaltet. Zur Ermittlung der Position kann die Arbeitsmaschine ein, insbesondere satellitengestütztes, Navigationssystem aufweisen, welches mit einer Steuereinrichtung zur Schaltung zumindest der Betriebsmodi der zweiten Beleuchtungseinrichtungen verbunden ist. Die ermittelte Position kann beispielsweise eine Position der Arbeitsmaschine auf einem Feld oder einer öffentlichen Straße sein. Bei einer ermittelten Position auf einem Feld kann so durch die Steuereinrichtung automatisch der zweite Betriebsmodus für die zweiten Beleuchtungseinrichtungen geschaltet werden, wodurch eine verbesserte Ausleuchtung der Arbeitsumgebung der Arbeitsmaschine ermöglicht werden kann. Bei einer ermittelten Position, die die einer öffentlichen Straße entspricht, kann automatisch durch die Steuereinrichtung der erste Betriebsmodus für die zweiten Beleuchtungseinrichtungen geschaltet werden, wodurch ein unnötiges Blenden anderer Verkehrsteilnehmer vermieden werden kann. Dies hat den Vorteil, dass eine Arbeitsbelastung des Bedieners der Arbeitsmaschine verringert und die Verkehrssicherheit erhöht werden kann.

In einer besonders bevorzugten Ausgestaltung der Erfindung weist die zweite Beleuchtungseinrichtung mindestens zwei unterschiedliche, insbesondere eine geringe und eine hohe, schaltbare Leichtweiten auf. Die Leuchtweite der zweiten Beleuchtungseinrichtung kann mindestens zwischen einer geringen Leuchtweite und einer hohen Leuchtweite umgeschaltet werden. Ebenfalls ist es denkbar, dass die Leuchtweite im Wesentlichen stufenlos, insbesondere durch die Steuereinrichtung, regelbar ist. Bei einer geringen Leuchtweite entspricht das von der zweiten Beleuchtungseinrichtung abgestrahlte Licht den gesetzlichen Erfordernissen, beispielsweise dem Abblendlicht, zur Teilnahme am öffentlichen Straßenverkehr. Ein Umschalten zwischen den Leuchtweiten kann dabei durch die Steuereinrichtung erfolgen, insbesondere automatisch, beispielsweise in Abhängigkeit einer Position der Arbeitsmaschine. Dies hat den Vorteil, dass die Leuchtweite den jeweiligen Bedürfnissen des Bedieners angepasst werden kann.

Vorteilhafterweise ist die zweite Beleuchtungseinrichtung in Abhängigkeit eines Lenkwinkels schaltbar. Der Lenkwinkel, beispielsweise von Vorderrädern der Arbeitsmaschine, wird dabei durch den Bediener durch ein Betätigen des Lenkrades zur Richtungsänderung der Arbeitsmaschine eingestellt. Dies kann beispielsweise im Vorgewende auf einem Feld oder beim Abbiegen an einer Kreuzung auf einer öffentlichen Straße erfolgen. Das Schalten der zweiten Beleuchtungseinrichtung entspricht dabei einem Einschalten der Lichtquelle. Bei einem geschalteten ersten Betriebsmodus, beispielsweise an einer Kreuzung auf einer öffentlichen Straße, kann bei einem Abbiegen nach rechts und einem entsprechenden Lenkwinkel eine an der rechten Seite der Arbeitsmaschine angeordnete zweite Beleuchtungseinrichtung mit einer geringen Leuchtweite aufleuchten. Dadurch kann für den Bediener die Sicht in Richtung der geplanten Fahrrichtung verbessert werden. Auf einem Feld, beispielsweise bei einer Wende im Vorgewende kann in dem zweiten Betriebsmodus, je nach Lenkwinkel, die linke oder rechte zweite Beleuchtungseinrichtung mit einer hohen Leuchtweite aufleuchten, wodurch eine gezielte Ausleuchtung der Arbeitsumgebung und/oder eines angebauten Arbeitsgerätes ermöglicht werden kann.

In einer besonders vorteilhaften Ausgestaltung der Erfindung ist die zweite Beleuchtungseinrichtung in dem ersten Betriebsmodus ausschließlich mit einer geringen Leuchtweite betreibbar. Hierdurch kann ein Betrieb der zweiten Beleuchtungseinrichtung entsprechend den gesetzlichen Vorschriften sichergestellt werden. Dies hat den Vorteil, dass beispielsweise bei einer Kurvenfahrt oder einem Abbiegen die Umgebung vor der Arbeitsmaschine besser ausgeleuchtet werden kann und beispielsweise ein Abbiegelicht oder Kurvenlicht ermöglicht werden kann.

Weiterhin vorteilhafterweise weist die zweite Beleuchtungseinrichtung mindestens eine Lichtquelle auf. Hierbei kann die Lichtquelle in Form eines sogenannten Zweiwendel-Leuchtmittels ausgebildet sein. Ein Zweiwendel-Leuchtmittel ist eine in der Fahrzeugtechnik übliche Glühbirne, welche zwei, meist koaxial angeordnete, Wendel zur Lichterzeugung aufweist, wobei das Abblendlicht und das Fernlicht jeweils durch einen Wendel erzeugt werden. Dies hat den Vorteil, dass ein schalten der Leuchtweiten mit einer einzelnen Lichtquelle umgesetzt werden kann, wodurch die zweite Beleuchtungseinrichtung in dem ersten und/oder dem zweiten Betriebsmodus einsetzbar ist. Ebenfalls denkbar ist, dass die eine Lichtquelle der zweiten Beleuchtungseinrichtung in Form eines einflammigen Leuchtmittels, beispielsweise einer Xenon-Lampe, ausgebildet ist. Das einflammige Leuchtmittel kann dabei eine feste Leuchtweite aufweisen und nur in einem zulässigen Betriebsmodus aktivierbar sein. So kann beispielsweise ein einflammiges Leuchtmittel mit geringer Leuchtweite in beiden Betriebsmodi einschaltbar sein, ein einflammiges Leuchtmittel mit hoher Leuchtweite jedoch nur in dem zweiten Betriebsmodus.

In einer besonders vorteilhaften Ausgestaltung der Erfindung ist die Leuchtweite, insbesondere eine geringe Leuchtweite, der Lichtquelle mit einer verschwenkbaren Klappe einstellbar. Die verschwenkbare Klappe kann derart an der Lichtquelle, insbesondere in Form eines einflammigen Leuchtmittels, angeordnet sein, dass durch ein Verschenken der Klappe eine geringe und/oder eine hohe Leuchtweite einstellbar sind. Dadurch kann auch die Nutzung eines einflammigen Leuchtmittels in dem ersten und dem zweiten Betriebsmodus ermöglicht werden.

In einer besonders vorteilhaften Ausgestaltung der Erfindung weist die zweite Beleuchtungseinrichtung eine erste Lichtquelle und eine zweite Lichtquelle mit jeweils unterschiedlichen Leuchtweiten auf, wobei insbesondere die erste Lichtquelle eine geringe Leuchtweite und die zweite Lichtquelle eine hohe Leuchtweite aufweist. Hierbei können zwei getrennte Lichtquellen, beispielsweise in Form von getrennten Leuchtmitteln, eingesetzt werden. Durch die unterschiedlichen Leuchtweiten der Lichtquellen können einfache Leuchtmittel ohne veränderbare Leuchtweiten eingesetzt werden, wobei die Leuchtweite der zweiten Beleuchtungseinrichtung durch entsprechendes, beispielsweise alternatives, Schalten der ersten und der zweiten Lichtquelle erfolgen kann. So kann beispielsweise die erste Lichtquelle eine geringe Leuchtweite aufweisen und in dem ersten Betriebsmodus benutzt werden, während in dem zweiten Betriebsmodus, bei dem eine hohe Leuchtweite vorteilhaft ist, die zweite Lichtquelle. In dem zweiten Betriebsmodus ist auch eine gemeinsame Aktivierung der ersten und der zweiten Lichtquelle zur Verbesserung der Ausleuchtung möglich.

Vorteilhafterweise ist die zweite Beleuchtungseinrichtung frontseitig an der Arbeitsmaschine, insbesondere an einer Kühlerhaube, und/oder an einem Kabinendach der Arbeitsmaschine angeordnet. Die zweite Beleuchtungseinrichtung kann grundsätzlich an verschiedenen Einbauorten an der Arbeitsmaschine angeordnet sein. Vorzugsweise ist die Beleuchtungseinrichtung frontseitig an der Arbeitsmaschine angeordnet. Dabei kann die. Dadurch kann eine besonders gute Ausleuchtung der Umgebung vor der Arbeitsmaschine ermöglicht werden.

Besonders vorteilhafterweise ist die zweite Beleuchtungseinrichtung unter einem Winkel von etwa 40° bis 50° vorzugsweise von im We sentlichen 45° zur Fahrzeuglängsachse angeordnet. Die Winkelangabe bezieht sich dabei auf die in einer horizontalen Ebene gemessene mittlere Abstrahlachse des von der zweiten Beleuchtungseinrichtung abgestrahlten Lichtes relativ zur Fahrzeuglängsachse. Die mittlere Abstrahlachse einer Beleuchtungseinrichtung ist dabei die Achse, welche mittig in dem abgestrahlten Lichtkegel angeordnet ist, d.h. eine Winkelhalbierende. Die zweiten Beleuchtungseinrichtungen sind dabei jeweils seitlich nach außen gerichtet angeordnet um besonders in Kurven oder bei einem Abbiegen eine verbesserte Ausleuchtung der Umgebung vor der Arbeitsmaschine zu ermöglichen. Die Umgebung vor der Arbeitsmaschine umfasst dabei auch beiderseits seitliche Bereiche, insbesondere vor der Vorderachse der Arbeitsmaschine.

Die Erfindung wird im Folgenden anhand von Figuren näher erläutert. Daraus ergeben sich auch weitere vorteilhafte Effekte und Wirkungen. In den Figuren zeigt:
- Fig. 1: einen Traktor in schematischer Ansicht von vorn;
- Fig. 2: zweite Beleuchtungseinrichtungen in schematischer Draufsicht in eingebautem Zustand an einer Arbeitsmaschine;
- Fig. 3: eine zweite Beleuchtungseinrichtung in einem ersten Betriebsmodus in einer schematischen Seitenansicht; und
- Fig. 4: eine zweite Beleuchtungseinrichtung in einem zweiten Betriebsmodus in einer schematischen Seitenansicht.

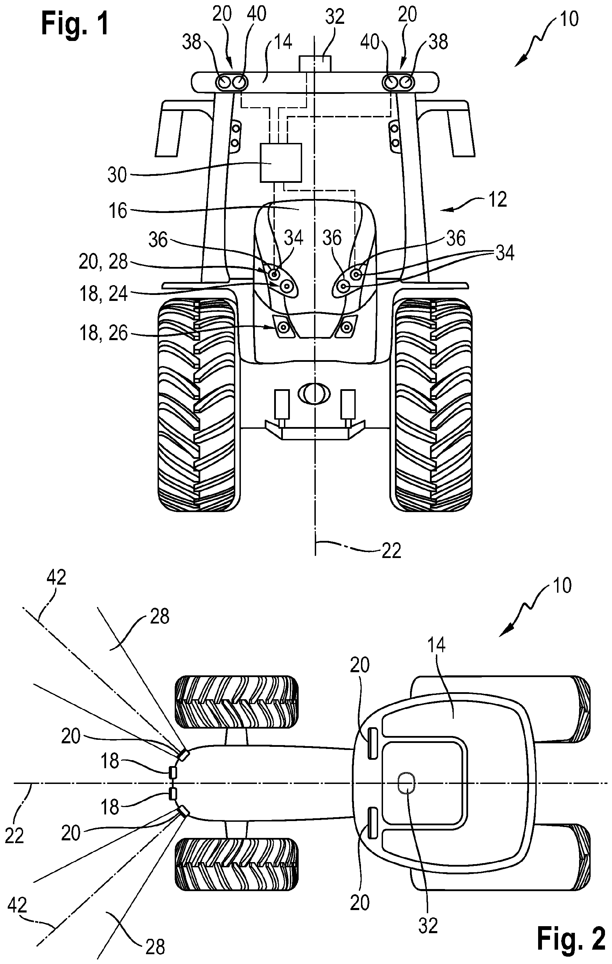

Fig. 1 zeigt ein landwirtschaftliches Arbeitsmaschine 10 in Form eines Traktors in schematischer Ansicht von vorne. Auf für sich bekannte Weise weist der Traktor 10 eine Fahrerkabine 12 mit einem Kabinendach 14 und eine Motorhaube 16 auf. Die Motorhaube 16 erstreckt sich bezogen auf eine bevorzugte Vorwärtsfahrtrichtung des Traktors 10 von einem unteren Bereich der Fahrerkabine 12 nach vorn, d.h. aus der Zeichnungsebene der Fig. 1 hinaus.

Frontseitig an der Motorhaube 16 sind vier erste Beleuchtungseinrichtungen 18 und zwei zweite Beleuchtungseinrichtungen 20 angeordnet. An dem Kabinendach 14 der Fahrerkabine 12 sind ebenfalls frontseitig zweite Beleuchtungseinrichtungen 20 angeordnet. Die Anordnung der Beleuchtungseinrichtungen 18, 20 ist bezogen auf eine fiktive Symmetrieebene 22 symmetrisch. Damit werden jeweils auf gleicher Höhe angeordnete Paare von ersten Beleuchtungseinrichtungen 18 und zweiten Beleuchtungseinrichtungen 20 gebildet. Die ersten Beleuchtungseinrichtungen 18 dienen dabei zumindest der Straßenfahrt und erfüllen die Funktion eines Abblend- und Fernlichtes 24 sowie eines Standlichtes 26. Die zweiten Beleuchtungseinrichtungen 20 erfüllen die Funktion eines Arbeitslichtes 28, welches besonders zur Ausleuchtung einer Umgebung der Arbeitsmaschine 10 beispielsweise auf einem Feld dient.

Bei der dargestellten Arbeitsmaschine 10 sind zumindest die zweiten Beleuchtungseinrichtungen 20 mit einer Steuereinrichtung 30 zur Steuerung der zweiten Beleuchtungseinrichtungen 20 verbunden. Zusätzlich ist die Steuereinrichtung 30 mit einem, insbesondere satellitengestütztem, Navigationssystem 32 zur Übermittelung von Positionsangaben der Arbeitsmaschine 10 verbunden.

Erfindungsgemäß sind die zweiten Beleuchtungseinrichtungen 20 in einem ersten Betriebsmodus für eine Straßenfahrt und einem zweiten Betriebsmodus als Arbeitsbeleuchtung einsetzbar. Hierbei kann beispielsweise eine insbesondere wechselseitige Schaltung des ersten Betriebsmodus und des zweiten Betriebsmodus in Abhängigkeit einer durch das Navigationssystem 32 ermittelten Position der Arbeitsmaschine 10 erfolgen. So kann beispielsweise in dem ersten Betriebsmodus ausschließlich eine für den öffentlichen Straßenverkehr zulässige Aktivierung der zweiten Beleuchtungseinrichtungen 20 erfolgen. Der erste Betriebsmodus kann beispielsweise automatisch aktiviert werden, wenn durch das Navigationssystem 32 eine Position der Arbeitsmaschine 10 auf einer öffentlichen Straße ermittelt wird. In dem ersten Betriebsmodus können beispielsweise nur die zweiten Beleuchtungseinrichtungen 20 aktivierbar sein, welche hinsichtlich ihrer Anordnung an der Arbeitsmaschine 10 und ihrer Lichtabgabe den gesetzlichen Vorschriften für den öffentlichen Straßenverkehr entsprechen. In dem zweiten Betriebsmodus hingegen können die zweiten Beleuchtungseinrichtungen 20 für eine möglichst weitreichende Ausleuchtung der Umgebung des Traktors 10 genutzt werden.

Besonders in dem ersten Betriebsmodus ist eine im Wesentlichen gerichtete Abgabe des Lichtes der ersten Beleuchtungseinrichtungen 18 und der zweiten Beleuchtungseinrichtungen 20 erforderlich, um im öffentlichen Straßenverkehr einsetzbar zu sein und eine Blendung anderer Verkehrsteilnehmer zu vermeiden. Hierzu können die Beleuchtungseinrichtungen 18, 20 jeweils mindestens eine Lichtquelle 34 aufweisen, welche zur Bündelung des Lichtes, beispielsweise des Abblendlichtes 24 oder des Arbeitslichtes 28, in einem Reflektor 36 angeordnet sein können. Die frontseitig an der Kühlerhaube 16 der Arbeitsmaschine 10 angeordneten ersten Beleuchtungseinrichtungen 18 und zweiten Beleuchtungseinrichtungen 20 weisen dabei jeweils einen einzelne Lichtquelle 34 auf, welche in einem Reflektor 36 angeordnet ist. Die an der Vorderseite des Kabinendaches 14 angeordneten zweiten Beleuchtungseinrichtungen 20 weisen dagegen jeweils eine erste Lichtquelle 38 und eine unmittelbar dazu benachbart angeordnete zweite Lichtquelle 40 auf. Hierbei können die ersten Lichtquellen 38 und die zweiten Lichtquellen 40 eine unterschiedliche Abstrahlcharakteristik des jeweils erzeugten Arbeitslichtes 28 aufweisen. So kann die erste Lichtquelle 38 eine geringere Leuchtweite aufweisen als die zweite Lichtquelle 40, welche eine hohe Leuchtweite aufweisen kann. Die erste Lichtquelle 38 der zweiten Beleuchtungseinrichtung 20 kann in dem ersten Betriebsmodus aktivierbar, d.h. einschaltbar, sein, wohingegen in dem zweiten Betriebsmodus die erste Lichtquelle 38 und/oder die zweite Lichtquelle 40 zur Erreichung einer verbesserten Ausleuchtung der Umgebung der Arbeitsmaschine 10 einzeln oder gemeinsam aktivierbar sind. Dadurch können die an dem Kabinendach 14 angeordneten zweiten Beleuchtungsmittel 20 Arbeitslicht 28 mit unterschiedlichen, insbesondere mit geringen und hohen, Leuchtweiten bereitstellen, wodurch eine Nutzung dieser zweiten Beleuchtungseinrichtungen 20 im Wesentlichen blendfrei in dem ersten Betriebsmodus im Straßenverkehr ermöglicht wird.

In Fig. 2 ist ein einer Draufsicht eine beispielhafte Anordnung von ersten Beleuchtungseinrichtungen 18 frontseitig an der Motorhaube 16 des Traktors 10 dargestellt, welche an dem in Fig. 1 gezeigten Traktor 10 zur Bereitstellung eines Abblend- und Fernlichtes 24 dienen. Benachbart zu den ersten Beleuchtungseinrichtungen 18 sind ebenfalls außenseitig und ebenfalls an dem vorderen Ende der Motorhaube 16 zweite Beleuchtungseinrichtungen 20 angeordnet. Diese zweiten Beleuchtungseinrichtungen 20 dienen der Bereitstellung eines Lichtes, insbesondere Arbeitslichtes 28, sowohl in einem ersten Betriebsmodus als auch in einem zweiten Betriebsmodus. Die zweiten Beleuchtungseinrichtungen 20 weisen eine mittlere Abstrahlachse 42 auf, welche in einer horizontalen Ebene im Wesentlichen mittig in dem abgestrahlten Lichtkegel der jeweiligen Beleuchtungseinrichtung 20 angeordnet ist. Die zweiten Beleuchtungseinrichtungen 20 sind dabei unter einem Winkel zu der Symmetrieebene 22 der Arbeitsmaschine 10 abgeordnet, wobei der nach außen gerichtet Winkel im Wesentlichen 45° beträgt. Dies ermöglicht eine breitere Ausleuchtung der Umgebung vor der Arbeitsmaschine 10. In dem zweiten Betriebsmodus der zweiten Beleuchtungseinrichtungen 20 kann das Licht sowohl mit einer geringen Leuchtweite als auch mit einer hohen Leuchtweite abgegeben werden. In dem ersten Betriebsmodus hingegen erfolgt eine Aktivierung, d.h. Einschaltung, der zweiten Beleuchtungseinrichtungen 20 lediglich mit einer geringen Leuchtweite. Dadurch kann im Straßenverkehr zur Erhöhung der Verkehrssicherheit, beispielsweise lenkwinkelabhängig, ein Kurven- oder Abbiegelicht bereitgestellt werden.

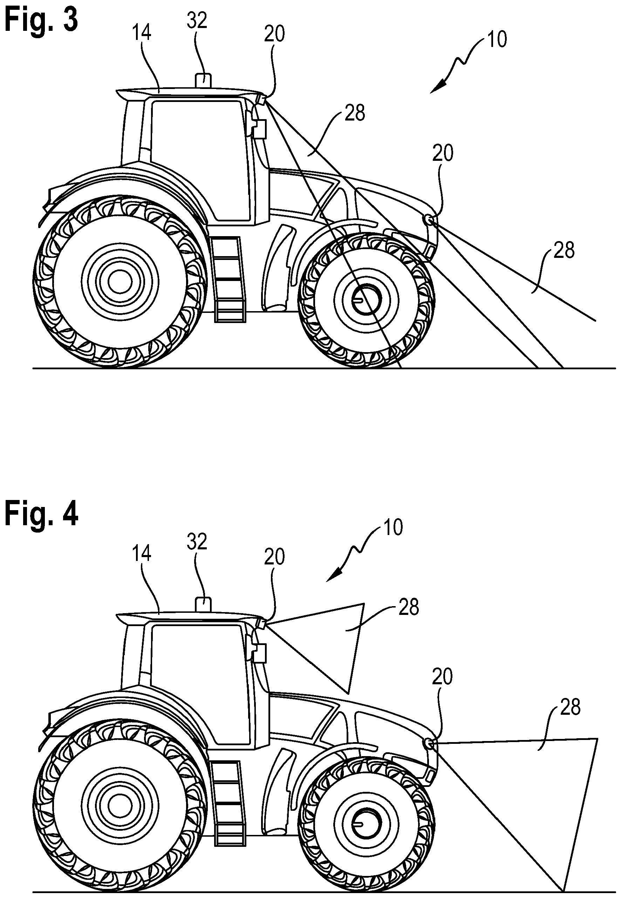

In Fig. 3 ist in einer Seitenansicht ein Traktor 10 mit erfindungsgemäßen zweiten Beleuchtungseinrichtungen 20 dargestellt. Die zweiten Beleuchtungseinrichtungen 20 sind beispielsweise in den ersten Betriebsmodus geschaltet, wobei lediglich eine Abgabe der erzeugten Lichtes, insbesondere des Arbeitslichtes 28, mit einer geringen Leuchtweite erfolgt. Dies betrifft die frontseitig an der Motorhaube 16 und/oder die an der Vorderseite des Kabinendaches 14 angeordneten zweiten Beleuchtungseinrichtungen 20. Die ersten Beleuchtungseinrichtungen 18 sind der besseren Übersicht halber nicht dargestellt. Nach einem Umschalten von dem ersten in dem zweiten Betriebsmodus (Fig. 4) können die zweiten Beleuchtungseinrichtungen 20 an der Motorhaube 16 und/oder dem Kabinendach 14 mit einer hohen Leuchtweite betrieben werden. Ein Umschalten der Betriebsmodi kann dabei in Abhängigkeit von einer durch das Navigationssystem 32 ermittelten Position der Arbeitsmaschine 10 erfolgen.

### Bezugszeichenliste

- 10: Landwirtschaftliche Arbeitsmaschine
- 12: Fahrerkabine
- 14: Kabinendach
- 16: Motorhaube
- 18: erste Beleuchtungseinrichtung
- 20: zweite Beleuchtungseinrichtung
- 22: Symmetrieebene
- 24: Abblend- und Fernlicht
- 26: Standlicht
- 28: Arbeitslicht
- 30: Steuereinrichtung
- 32: Navigationssystem
- 34: Lichtquelle
- 36: Reflektor
- 38: erste Lichtquelle
- 40: zweite Lichtquelle
- 42: Abstrahlachse

## Patentansprüche

1. Landwirtschaftliche Arbeitsmaschine (10) mit mindestens einer ersten Beleuchtungseinrichtung (18) zur Straßenfahrt, welche zumindest die Funktion eines Abblendlichtes und/oder eines Fernlichtes (24) erfüllt, und mindestens einer zweiten Beleuchtungseinrichtung (20), welche die Funktion eines Arbeitslichtes (28) erfüllt, wobei die Beleuchtungseinrichtungen (18, 20) zur Erzeugung des Lichtes Lichtquellen (34, 38, 40) aufweisen und das Licht zumindest teilweise gerichtet an eine Umgebung der Arbeitsmaschine (10) abgeben, wobei die zweite Beleuchtungseinrichtung (20) in einem ersten Betriebsmodus für eine Straßenfahrt und einem zweiten Betriebsmodus als Arbeitsbeleuchtung (28) einsetzbar ist, **dadurch gekennzeichnet, dass** der erste Betriebsmodus und/oder der zweite Betriebsmodus in Abhängigkeit einer Position der Arbeitsmaschine (10) durch eine Steuereinrichtung (30) automatisch geschaltet wird.

2. Arbeitsmaschine nach Anspruch 1, **dadurch gekennzeichnet, dass** die Arbeitsmaschine (10) ein Navigationssystem (32) aufweist, welches mit der Steuereinrichtung (30) zur Schaltung der Betriebsmodi der zweiten Beleuchtungseinrichtung (20) verbunden ist.

3. Arbeitsmaschine nach Anspruch 1 oder 2, **dadurch gekennzeichnet, dass** die zweite Beleuchtungseinrichtung (20) mindestens zwei unterschiedliche, schaltbare Leuchtweiten, insbesondere eine geringe und eine hohe Leichtweite, aufweist.

4. Arbeitsmaschine nach einem der vorherigen Ansprüche, **dadurch gekennzeichnet, dass** die zweite Beleuchtungseinrichtung (20) in Abhängigkeit eines Lenkwinkels schaltbar ist.

5. Arbeitsmaschine nach Anspruch 4, **dadurch gekennzeichnet, dass** die zweite Beleuchtungseinrichtung (20) in dem ersten Betriebsmodus ausschließlich mit einer geringen Leuchtweite betreibbar ist.

6. Arbeitsmaschine nach einem der vorherigen Ansprüche, **dadurch gekennzeichnet, dass** die zweite Beleuchtungseinrichtung (20) mindestens eine Lichtquelle (34, 38, 40) aufweist.

7. Arbeitsmaschine nach Anspruch 6, **dadurch gekennzeichnet, dass** die Leuchtweite, insbesondere eine geringe Leuchtweite, der Lichtquelle (34, 38, 40) mit einer verschwenkbaren Klappe einstellbar ist.

8. Arbeitsmaschine nach einem der vorherigen Ansprüche, **dadurch gekennzeichnet, dass** die zweite Beleuchtungseinrichtung (20) eine erste Lichtquelle (38) und eine zweite Lichtquelle (40) mit jeweils unterschiedlichen Leuchtweiten aufweist, wobei insbesondere die erste Lichtquelle (38) eine geringe Leuchtweite und die zweite Lichtquelle (40) eine hohe Leuchtweite aufweist.

9. Arbeitsmaschine nach einem der vorherigen Ansprüche, **dadurch gekennzeichnet, dass** die zweite Beleuchtungseinrichtung (20) frontseitig an der Arbeitsmaschine (10), insbesondere an einer Kühlerhaube (16), und/oder an einem Kabinendach (14) der Arbeitsmaschine (10) angeordnet ist.

10. Arbeitsmaschine nach einem der vorherigen Ansprüche, **dadurch gekennzeichnet, dass** die zweite Beleuchtungseinrichtung (20) unter einem Winkel von etwa 40° bis 50°, vorzugsweise von im Wesentlichen 45° zur Fahrzeuglängsachse angeordnet ist.

## Claims

1. An agricultural working machine (10) having at least one first lighting device (18) for road travel, which carries out at least the function of a low beam and/or a high beam (24), and at least one second lighting device (20) which carries out the function of a working light (28), wherein the lighting devices (18, 20) are provided with light sources (34, 38, 40) for the production of light and at least a portion of the light is directed onto an area surrounding the working machine (10), wherein the second lighting device (20) can be deployed in a first operational mode for road travel and in a second operational mode as working lighting (28), **characterized in that** switching into the first operational mode and/or the second operational mode is carried out automatically via a control device (30) as a function of a position of the working machine (10).

2. The working machine according to claim 1, **characterized in that** the working machine (10) is provided with a navigation system (32) which is connected to the control device (30) for switching the operational modes of the second lighting device (20).

3. The working machine according to claim 1 or claim 2, **characterized in that** the second lighting device (20) is provided with at least two different switchable luminous ranges, in particular a small and a large luminous range.

4. The working machine according to one of the preceding claims, **characterized in that** the second lighting device (20) can be switched as a function of a steering angle.

5. The working machine according to claim 4, **characterized in that** in the first operational mode, the second lighting device (20) can be operated exclusively with a small luminous range.

6. The working machine according to one of the preceding claims, **characterized in that** the second lighting device (20) is provided with at least one light source (34, 38, 40).

7. The working machine according to claim 6, **characterized in that** the luminous range, in particular a small luminous range, of the light source (34, 38, 40) can be adjusted with a pivotable flap.

8. The working machine according to one of the preceding claims, **characterized in that** the second lighting device (20) is provided with a first light source (38) and a second light source (40) with respectively different luminous ranges, wherein in particular, the first light source (38) is provided with a small luminous range and the second light source (40) is provided with a large luminous range.

9. The working machine according to one of the preceding claims, **characterized in that** the second lighting device (20) is disposed at the front of the working machine (10), in particular on a radiator bonnet (16) and/or on a cabin roof (14) of the working machine (10).

10. The working machine according to one of the preceding claims, **characterized in that** the second lighting device (20) is disposed at an angle of approximately 40° to 50°, preferably at essentially 45°, to the longitudinal axis of the vehicle.

## Revendications

1. Machine de travail agricole (10) comprenant au moins un premier dispositif d'éclairage (18) pour le trajet sur route, lequel remplit au moins la fonction de feux de croisement et/ou de feux de route (24), et au moins un second dispositif d'éclairage (20) qui remplit la fonction de feux de travail (28), les dispositifs d'éclairage (18, 20) comportant, pour produire la lumière, des sources lumineuses (34, 38, 40), et la lumière étant dirigée au moins en partie vers un environnement de la machine de travail (10), le second dispositif d'éclairage (20) pouvant être utilisé, dans un premier mode de fonctionnement, pour un trajet sur route et, dans un second mode de fonctionnement, comme éclairage de travail (28), **caractérisée en ce que** le premier mode de fonctionnement et/ou le second mode de fonctionnement sont sélectionnés automatiquement par l'intermédiaire d'un équipement de commande (30) en fonction d'une position de la machine de travail (10).

2. Machine de travail selon la revendication 1, **caractérisée en ce que** la machine de travail (10) comporte un système de navigation (32) qui est connecté à l'équipement de commande (30) pour sélectionner les modes de fonctionnement du second dispositif d'éclairage (20).

3. Machine de travail selon la revendication 1 ou 2, **caractérisée en ce que** le second dispositif d'éclairage (20) possède au moins deux portées d'éclairage différentes sélectionnables, en particulier une portée d'éclairage courte et une longue.

4. Machine de travail selon une des revendications précédentes, **caractérisée en ce que** le second dispositif d'éclairage (20) est sélectionnable en fonction d'un angle de braquage.

5. Machine de travail selon la revendication 4, **caractérisée en ce que**, dans le premier mode de fonctionnement, le second dispositif d'éclairage (20) ne peut fonctionner qu'avec une portée d'éclairage courte.

6. Machine de travail selon une des revendications précédentes, **caractérisée en ce que** le second dispositif d'éclairage (20) comporte au moins une source lumineuse (34, 38, 40).

7. Machine de travail selon la revendication 6, **caractérisée en ce que** la portée d'éclairage, en particulier une portée d'éclairage courte, de la source lumineuse (34, 38, 40) est réglable avec un volet pivotant.

8. Machine de travail selon une des revendications précédentes, **caractérisée en ce que** le second dispositif d'éclairage (20) comporte une première source lumineuse (38) et une seconde source lumineuse (40) avec chacune des portées d'éclairage différentes, en particulier la première source lumineuse (38) possédant une portée d'éclairage courte, et la seconde source lumineuse (40) possédant une portée d'éclairage longue.

9. Machine de travail selon une des revendications précédentes, **caractérisée en ce que** le second dispositif d'éclairage (20) est disposé frontalement sur la machine de travail (10), en particulier sur un couvre-radiateur (16), et/ou sur un toit de cabine (14) de la machine de travail (10).

10. Machine de travail selon une des revendications précédentes, **caractérisée en ce que** le second dispositif d'éclairage (20) est disposé selon un angle d'environ 40° à 50°, de préférence de sensiblement 45° par rapport à l'axe longitudinal du véhicule.
